# EUROPEAN PATENT APPLICATION

(11) **EP 4 782 161 A1**
(43) Date of publication of application: **29.07.2026**
(21) Application number: 23953152.8
(22) Date of filing: 19.09.2023
(51) Int. Cl.: B25J 13/08, B25J 5/00, B25J 9/16, B25J 19/02, G05D 1/20, G06N 3/02

(54) **DRIVING ROBOT AND CONTROL METHOD THEREOF**

(71) Applicant: Bear Robotics Korea, Inc., Seoul 04779 (KR)
(72) Inventor: HWANG, Keumsung, Seoul 06772 (KR); CHOI, Wonsu, Seoul 06772 (KR); NAM, Heejin, Seoul 06772 (KR); WOO, Sungho, Seoul 06772 (KR)
(74) Representative: Murgitroyd & Company
(86) International application number: PCT/KR2023/014109
(87) International publication number: WO 2025/063327

(57) **Abstract**

The present disclosure relates to a driving robot capable of driving to a destination without map and location information and a control method thereof. The driving robot may comprise: a sensor unit for acquiring surrounding environment information; an input unit for input of a movement command; a drive motor unit for moving the robot; and a control unit for controlling the drive motor unit on the basis of the surrounding environment information and the movement command, wherein the control unit generates road structure information by recognizing a road structure on the basis of the surrounding environment information, selects a movement target point and an action of the robot on the basis of the road structure information and the movement command, determines a driving operation of the robot by inputting the surrounding environment information and selection information including the movement target point and the action of the robot into a pre-trained neural network model, and controls the drive motor unit to move the robot on the basis of the determined driving operation.

## Description

### TECHNICAL FIELD

The present disclosure relates to a driving robot capable of driving to a destination based on artificial intelligence without relying on map and location information, and a method of controlling the same.

### BACKGROUND

In general, a robot is a machine that automatically processes or operates tasks given to it by its own capabilities, and the application fields of robots are generally classified into various fields such as industrial, medical, space, and underwater applications.

Recently, there has been a growing trend of robots capable of communicating or interacting with humans through voice or gestures.

Such robots may include various types of robots, such as guidance robots deployed in specific locations to provide users with various types of information, and home robots deployed in households.

In order for a robot to navigate, it must locate itself on a map, there must be a path to the destination on the map, and the robot must be able to control its motors to follow the path.

The location of the robot on the map can be determined through a SLAM (Simultaneous Localization and Mapping) function that compares the robot's sensor information, including camera images, LiDAR, and distances from the robot to surrounding obstacles, with map information.

In addition, generation of a path to a destination is divided into the operation of generating a global path from the robot's location to the destination on the map, and generating a local path for avoiding obstacles around the robot. The robot can control its motors through a motion controller to follow the final generated local path.

However, when the robot fails to recognize its own location or fails to generate a path such as a global path or local path, it has no way of knowing the path to the destination and thus stops until assistance from an external party is available, for safety reasons.

In such cases, services such as delivery and guidance by the robot are indefinitely suspended until external assistance is available, or there is the inconvenience of having to move the robot to a different location and restart the robot for location re-recognition.

Accordingly, there is a need for the development of a driving robot capable of moving to a destination based on a given path movement command and recognition of a road structure, even without relying on map and location information.

### DISCLOSURE

### Technical Problem

The present disclosure is directed to solving the above-described issues and other related issues.

An object of the present disclosure is to provide a driving robot capable of stably moving to a destination while recognizing a road structure without map and location information, by selecting a movement target point and an action of the robot based on road structure information and a movement command and determining a driving operation of the robot based on artificial intelligence.

### Technical Solution

A driving robot according to an embodiment of the present disclosure may include a sensor configured to acquire surrounding environment information, an input unit configured to receive a movement command, a drive motor configured to move the robot, and a controller configured to control the drive motor based on the surrounding environment information and the movement command. The controller may be configured to recognize a road structure based on the surrounding environment information to generate road structure information, select a movement target point and an action of the robot based on the road structure information and the movement command, determine a driving direction and speed of the robot by inputting the surrounding environment information and selection information including the movement target point and the action of the robot into a pre-trained neural network model, and control the drive motor to move the robot based on the determined driving direction and speed.

A method of controlling a driving robot including a drive motor according to an embodiment of the present disclosure may include acquiring surrounding environment information and a movement command, recognizing a road structure based on the surrounding environment information and generating road structure information, selecting a movement target point and an action of the robot based on the road structure information and the movement command, determining a driving direction and speed of the robot by inputting the surrounding environment information and selection information including the movement target point and the action of the robot into a pre-trained neural network model, and controlling the drive motor to move the robot based on the determined driving direction and speed.

### Advantageous Effects

According to an embodiment of the present disclosure, a driving robot may stably travel to a destination while recognizing a road structure without map and location information, by selecting a movement target point and an action of the robot based on road structure information and a movement command and determining a driving operation of the robot based on artificial intelligence.

Thus, the present disclosure may enable a robot to travel even without map and location information, thereby eliminating the need for scanning and mapping operations for driving of the robot and saving the cost and time consumed therefor.

In addition, the present disclosure may be applied even when the robot temporarily loses location information.

That is, according to the present disclosure, the robot does not need to have map and location information, and therefore it may be operated with a relatively lightweight system and may be easily applied to new environments.

### BRIEF DESCRIPTION OF THE DRAWINGS

FIG. 1 is a diagram illustrating a driving robot according to an embodiment of the present disclosure.
FIG. 2 is a diagram illustrating a process of acquiring surrounding environment information by a driving robot according to an embodiment of the present disclosure.
FIGS. 3 and 4 are diagrams illustrating a process of generating a measured distance map by a driving robot according to an embodiment of the present disclosure.
FIG. 5 is a diagram illustrating a process of generating road structure information by a driving robot according to an embodiment of the present disclosure.
FIG. 6 is a diagram illustrating a process of calculating an intersection collision area by a driving robot according to an embodiment of the present disclosure.
FIGS. 7 to 9 are diagrams illustrating road structure information related to a driving robot according to an embodiment of the present disclosure.
FIGS. 10 and 11 are diagrams illustrating a controller of a driving robot according to an embodiment of the present disclosure.
FIGS. 12 and 13 are diagrams illustrating a global map analysis process of a driving robot according to an embodiment of the present disclosure.
FIG. 14 is a diagram illustrating a global path analysis process of a driving robot according to an embodiment of the present disclosure.
FIG. 15 is a diagram illustrating a movement process based on a movement command script of a driving robot according to an embodiment of the present disclosure.
FIG. 16 is a diagram illustrating a process of generating a movement command script based on a sketch map by a driving robot according to an embodiment of the present disclosure.
FIG. 17 is a flowchart illustrating a control process of a driving robot according to an embodiment of the present disclosure.

### DETAILED DESCRIPTION

Hereinafter, embodiments disclosed in the present specification will be described in detail with reference to the accompanying drawings. Identical or similar components are assigned the same reference numerals regardless of reference symbols, and redundant descriptions thereof will be omitted. The suffixes "module" and "unit" for components used in the following description are given or used interchangeably solely for ease of drafting the specification, and do not themselves have distinct meanings or roles. In addition, in describing the embodiments disclosed in the present specification, a detailed description of related known technology will be omitted to avoid obscuring the gist of the embodiments disclosed herein. The accompanying drawings are provided merely to facilitate understanding of the embodiments disclosed herein. The technical idea disclosed in this specification should not be limited by the drawings. It should be understood that all modifications, equivalents, and substitutions that fall within the spirit and scope of the present disclosure are encompassed by the present disclosure.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

As used herein, the terms neural network, neural network model, and network function may be used interchangeably. A neural network may be composed of a set of interconnected computational units generally referred to as "nodes." These "nodes" may also be referred to as "neurons." A neural network includes at least two nodes. The nodes (or neurons) constituting a neural network may be interconnected by one or more "links."

Artificial Intelligence (AI) refers to the field of research into artificial intelligence or methodologies for creating the same, and machine learning refers to the field of research that defines various problems addressed in the field of artificial intelligence and studies methodologies for solving them. Machine learning is also defined as an algorithm that improves performance on a given task through continuous experience.

An Artificial Neural Network (ANN) is a model used in machine learning, and may refer to the overall class of models with problem-solving capabilities that are composed of artificial neurons (nodes) forming a network through synaptic connections. An artificial neural network may be defined by the pattern of connections between neurons in different layers, the learning process for updating model parameters, and the activation function for generating output values.

An artificial neural network may include an input layer, an output layer, and optionally one or more hidden layers. Each layer includes one or more neurons, and the artificial neural network may include synapses connecting neurons to one another. In an artificial neural network, each neuron may output a value of an activation function for input signals received through synapses, weights, and biases.

Model parameters refer to parameters determined through learning, and include the weights of synaptic connections and the biases of neurons. Hyperparameters refer to parameters that must be set prior to learning in a machine learning algorithm, and include the learning rate, number of iterations, mini-batch size, and initialization function.

The objective of training an artificial neural network may be viewed as determining model parameters that minimize the loss function. The loss function may be used as an indicator for determining optimal model parameters during the training process of an artificial neural network.

Machine learning may be classified into supervised learning, unsupervised learning, and reinforcement learning according to the learning method.

Supervised learning refers to a method of training an artificial neural network with labels for training data given. A label may refer to a correct answer (or result value) that the artificial neural network should infer when training data is input. Unsupervised learning may refer to a method of training an artificial neural network without labels given for training data. Reinforcement learning may refer to a learning method in which an agent defined within a certain environment is trained to select an action or a sequence of actions that maximizes cumulative rewards in each state.

Machine learning implemented with a Deep Neural Network (DNN) including multiple hidden layers among artificial neural networks is referred to as deep learning. Deep learning is a subset of machine learning. Hereinafter, the term machine learning is used as a concept that includes deep learning.

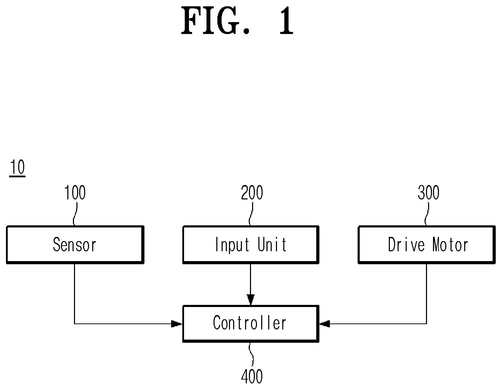

FIG. 1 is a diagram illustrating a driving robot according to an embodiment of the present disclosure.

As shown in FIG. 1, a driving robot 10 of the present disclosure may include a sensor 100 configured to acquire surrounding environment information, an input unit 200 configured to receive a movement command, a drive motor 300 configured to move the robot, and a controller 400 configured to control the drive motor 300 based on the surrounding environment information and the movement command.

Here, the sensor 100 may include at least one of a three-dimensional camera, a LiDAR sensor, an ultrasonic sensor, a distance sensor, and a virtual sensor.

The controller 400 may recognize a road structure based on the surrounding environment information to generate road structure information, select a movement target point and an action of the robot based on the road structure information and the movement command, determine a driving direction and speed of the robot by inputting the surrounding environment information and selection information including the movement target point and action of the robot into a pre-trained neural network model, and control the drive motor 300 to move the robot based on the determined driving direction and speed.

In generating the road structure information, the controller 400 may collect the surrounding environment information from the sensor, generate a measured distance map based on the surrounding environment information, and input the measured distance map into the pre-trained neural network model to recognize the road structure and generate the road structure information.

Here, in generating the measured distance map, the controller 400 may generate the measured distance map based on surrounding environment information measured by the sensor 100, which includes a front LiDAR sensor, a lateral LiDAR sensor, front ultrasonic and distance sensors, lateral ultrasonic and distance sensors, a front depth camera, a rear depth camera, a visual object recognition sensor for object detection, and a rear virtual sensor.

As an example, in generating the measured distance map, the controller 400 may generate a first measured distance map based on surrounding environment information measured by the LiDAR sensor, generate a second measured distance map based on surrounding environment information measured by the depth camera, and generate a third measured distance map based on surrounding environment information measured by the visual object recognition sensor.

In this case, in generating the measured distance map, the controller 400 may fuse the first measured distance map, the second measured distance map, and the third measured distance map to generate a measured distance map containing the distance from the robot to the nearest obstacle.

For example, in generating the measured distance map, the controller 400 may generate a measured distance map containing a total of 360 measured distance values at 1-degree intervals from -180 degrees to + 180 degrees.

In addition, in generating road structure information, the controller 400 may scale one-dimensional sensor input data including the measured distance map to a preset size, classify the scaled input data into feature extraction items, and input the classified feature extraction items into a plurality of pre-trained neural network models respectively to generate road structure information for each of the feature extraction items.

Here, the neural network models may include a neural network set structure combining a convolutional neural network and a neural network.

As an example, in the neural network model, a plurality of neural network sets may be arranged in parallel, wherein the neural network sets may receive different feature extraction items as input data and simultaneously output road structure information for each different feature extraction item.

For example, a first neural network set among the neural network sets may output first road structure information including a road direction angle, and a second neural network set among the neural network sets may output second road structure information including a collision area in each intersection direction based on the current location. A third neural network set among the neural network sets may output third road structure information including a collision area in each intersection direction ahead at a specific distance.

In addition, the controller 400 may train and update the neural network sets individually.

Further, when a straight line of a predetermined length or longer is detected in generating the road structure information, the controller 400 may recognize the straight line as a hallway wall. When the straight line of the wall is positioned on the left and right sides of the robot, the controller may calculate a road direction and hallway direction based on the straight line of the wall.

In some cases, when a straight line of a predetermined length or longer is detected in generating the road structure information, the controller 400 may recognize the straight line as a hallway wall, and may recognize a corresponding location as an intersection when the straight line of the wall is positioned facing a road.

In other cases, when a straight line of a predetermined length or longer is detected in generating the road structure information, the controller 400 may recognize the straight line as a hallway wall. When the straight line of the wall meets the road at a right angle, recognizes the corresponding location as a vertex or corner.

Next, when the movement command is input in selecting the movement target point and action of the robot, the controller 400 may check a type of the movement command, generate a movement command script corresponding to the type of the movement command, and select the movement target point and action of the robot based on the movement command script and the road structure information.

Here, when the type of the movement command is a script containing movement command content from a starting point to a destination in checking the type of the movement command, the controller 400 may use the script containing the movement command content as the movement command script.

In some cases, in checking the type of movement command, when the type of the movement command is analysis information obtained by analyzing a map and path given before a failure of recognition of a location of the robot, the controller 400 may generate the movement command script based on the analysis information.

Here, the controller 400 may include a global path analyzer configured to analyze a global path based on the map given before the failure of recognition of the location of the robot to provide path analysis information, and a global map analyzer configured to analyze a global map around the path based on the map given before the failure of recognition of the location of the robot to provide map analysis information.

As one example, the global map analyzer may analyze the global map around the path to generate a movement command including intersection information and road structure information.

That is, the global map analyzer may determine the map structure around the location of the robot on the estimated path and determine the map structure around an estimated target waypoint.

In addition, in determining the map structure around the location of the robot, the global map analyzer may determine the map structure based on the distance to the left wall and the distance to the right wall on the estimated path, and the direction angle of the left wall and the direction angle of the right wall on the global path.

Here, in determining the map structure around the target waypoint, the global map analyzer may determine the map structure based on intersection type and intersection direction information.

As an example, the global map analyzer may generate a movement command script including the distance the robot is to move, the action direction after the movement, the intersection type information, and direction information at an intersection.

In this case, when providing the direction information at the intersection, the global map analyzer may provide a clock-hand direction.

In addition, when there is an error in the location of the robot, the global path analyzer may calculate the location of the robot on the path through odometry position estimation, analyze the movement path up to the current point, and generate a movement command for the remaining path to the destination.

Here, the global path analyzer may generate a movement command script including the distance the robot is to move and the action direction after the movement.

In another case, when the type of the movement command is a sketch map containing movement indications from a starting point to a destination in checking the type of the movement command, the controller 400 may generate the movement command script based on the sketch map containing the movement indications.

Here, the controller 400 may check, based on the sketch map containing the movement indications in a block structure, whether a straight-ahead distance of a straight road and a straight-ahead distance between the destination and an intersection are set within the sketch map, and generate the movement command script when both the straight-ahead distance of the straight road and the straight-ahead distance between the destination and the intersection are set.

That is, in generating the movement command script, the controller 400 may automatically recognize the width of an intersection during driving of the robot, automatically recognize a return driving path of the robot, and reflect the recognized intersection width and return driving path in the movement command script.

In yet another case, when the type of the movement command is a sketch map editing map in checking the type of the movement command, the controller 400 may generate the movement command script based on the sketch map editing map.

Here, in generating the sketch map editing map, the controller 400 may generate the sketch map editing map by providing a floor plan of a map, adjusting transparency of the floor plan of the map, inputting a scale and information related to the map, inputting road information related to the map, inputting the destination on the map, and performing a test by selecting the starting point and the destination on the map and displaying a path.

As one example, in inputting the scale related to the map, the controller 400 may select two points within the map and input the distance between the two points to set the scale related to the map. In inputting the information related to the map, the controller may input the information related to the map including at least one of a region name of the map and a floor number. In inputting road information related to the map, the controller may input hallway information including the location and direction of the road and the width of the hallway.

In addition, in interpreting the movement command script, when the movement command script has unit action commands including robot driving direction information, a distance to move, action completion conditions, and a designated intersection skip count, the controller 400 may interpret the unit action commands sequentially in the order in which the unit action commands are arranged.

Next, the controller 400 may include a movement command generator configured to generate a movement command script, a road structure recognizer configured to recognize a road structure based on surrounding environment information and generate road structure information, an action controller configured to select a movement target point and action of the robot based on the road structure information and the movement command, and a driving controller configured to input selection information including the surrounding environment information and the movement target point and the action of the robot into a pre-trained neural network model to determine a driving operation of the robot, and control the drive motor 300 to move the robot based on the determined driving operation.

As described above, according to the present disclosure, a driving robot may stably drive to a destination while recognizing a road structure without map and location information, by selecting a movement target point and an action of the robot based on road structure information and a movement command and determining a driving operation of the robot based on artificial intelligence.

Thus, the present disclosure may enable a robot to travel even without map and location information, thereby eliminating the need for scanning and mapping operations for driving of the robot and saving the cost and time consumed therefor.

In addition, the present disclosure may be applied even when the robot temporarily loses location information.

That is, according to the present disclosure, the robot does not need to have map and location information, and therefore it may be operated with a relatively lightweight system and may be easily applied to new environments.

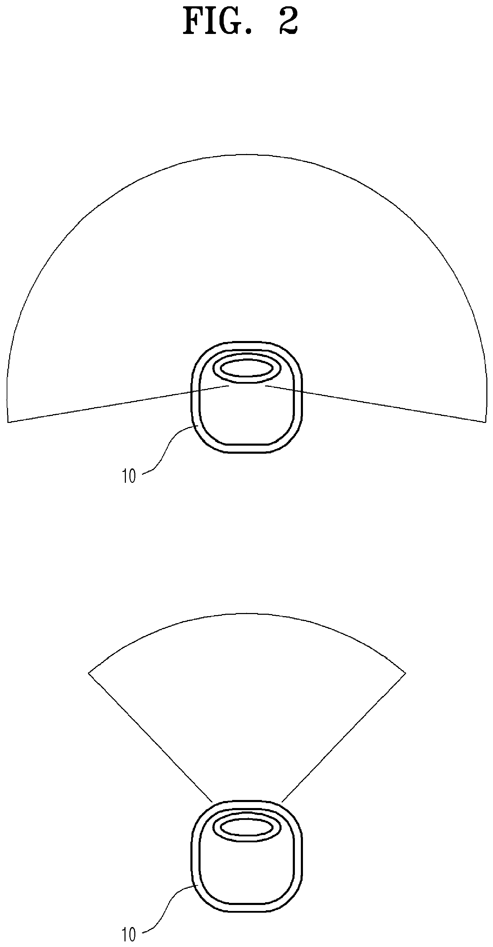

FIG. 2 is a diagram illustrating a process of acquiring surrounding environment information by a driving robot according to an embodiment of the present disclosure.

As shown in FIG. 2, the driving robot 10 of the present disclosure needs to determine the structure of the road currently given in order to move according to a movement command.

The driving robot 10 of the present disclosure may include a plurality of sensors configured to acquire surrounding environment information. The plurality of sensors may include at least one of a three-dimensional camera, a LiDAR sensor, an ultrasonic sensor, a distance sensor, and a virtual sensor.

Here, the driving robot 10 may recognize the road structure based on the surrounding environment information and generate road structure information.

The driving robot 10 may acquire the surrounding environment information from a front LiDAR sensor, a lateral LiDAR sensor, front ultrasonic and distance sensors, lateral ultrasonic and distance sensors, a front depth camera, a rear depth camera, a visual object recognition sensor for object detection, and a rear virtual sensor.

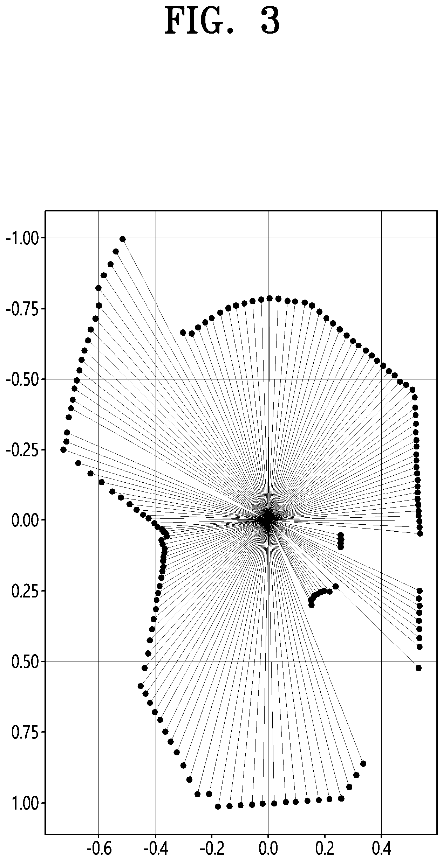

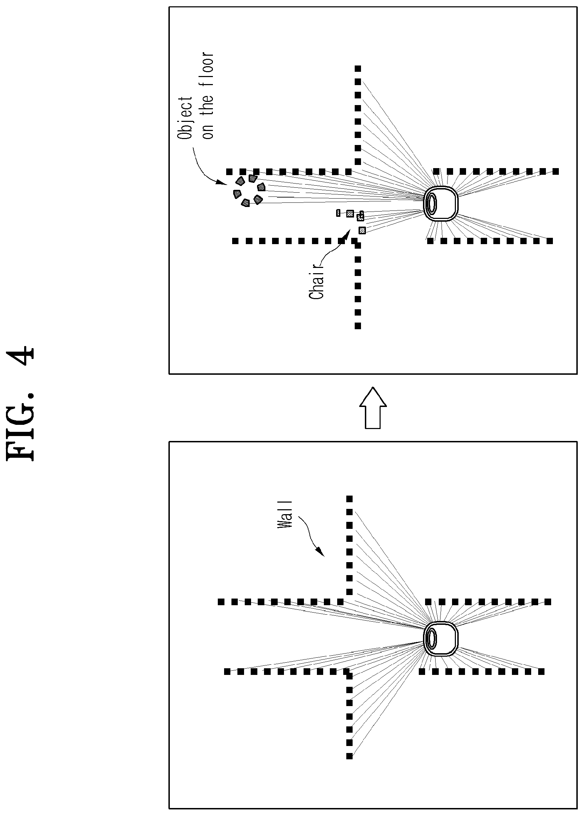

FIGS. 3 and 4 are diagrams illustrating a process of generating a measured distance map by a driving robot according to an embodiment of the present disclosure.

As shown in FIGS. 3 and 4, the driving robot of the present disclosure may collect the surrounding environment information from the sensors, generate a measured distance map based on the surrounding environment information, and input the measured distance map into the pre-trained neural network model to recognize the road structure and generate the road structure information.

Here, as shown in FIG. 3, the driving robot may generate a measured distance map based on the surrounding environment information measured by a front LiDAR sensor, a lateral LiDAR sensor, front ultrasonic and distance sensors, lateral ultrasonic and distance sensors, a front depth camera, a rear depth camera, a visual object recognition sensor for object detection, and a rear virtual sensor.

As one example, in generating the measured distance map, the driving robot may generate a first measured distance map based on the surrounding environment information measured by the LiDAR sensor, generate a second measured distance map based on the surrounding environment information measured by the depth camera, and generate a third measured distance map based on the surrounding environment information measured by the visual object recognition sensor.

In this case, in generating the measured distance map, the driving robot may fuse the first measured distance map, the second measured distance map, and the third measured distance map to generate a measured distance map containing the distance from the robot to the nearest obstacle.

For example, the driving robot may generate a measured distance map containing a total of 360 measured distance values at 1-degree intervals from -180 degrees to + 180 degrees.

As shown in FIG. 4, the driving robot may generate a first measured distance map by sensing walls based on the surrounding environment information measured by the LiDAR sensor.

Also, as shown in FIG. 4, the driving robot may generate a first measured distance map by sensing walls based on the surrounding environment information measured by the LiDAR sensor, a second measured distance map by sensing chairs based on the surrounding environment information measured by the depth camera, and a third measured distance map by sensing objects on the floor based on the surrounding environment information measured by the visual object recognition sensor. Then, it may fuse the maps to recognize the distance to the nearest obstacle from the robot.

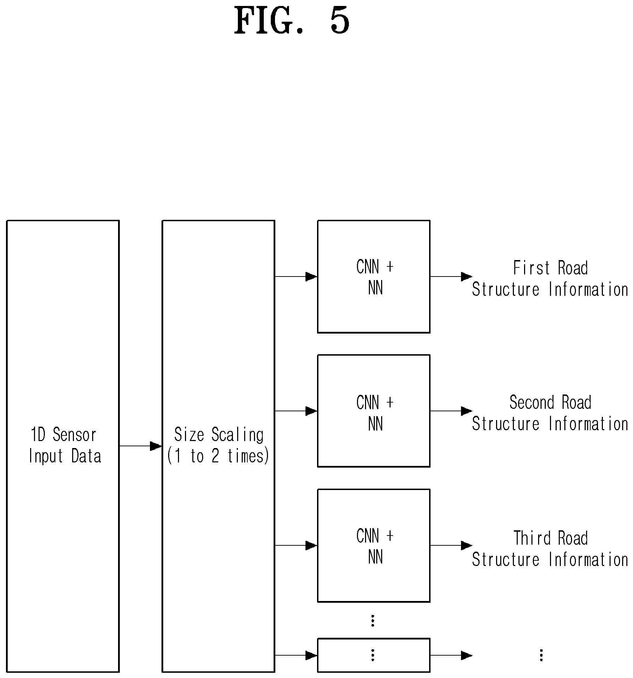

FIG. 5 is a diagram illustrating a process of generating road structure information by a driving robot according to an embodiment of the present disclosure.

As shown in FIG. 5, according to the present disclosure, in generating road structure information, the driving robot may scale one-dimensional sensor input data including the measured distance map to a preset size, classify the scaled input data into feature extraction items, and input the classified feature extraction items into a plurality of pre-trained neural network models respectively to generate road structure information for each of the feature extraction items.

Here, the neural network models may include a neural network set structure combining a convolutional neural network and a neural network.

As an example, in the neural network model, a plurality of neural network sets may be arranged in parallel, wherein the neural network sets may receive different feature extraction items as input data and simultaneously output road structure information for each different feature extraction item.

For example, a first neural network set among the neural network sets may output first road structure information including a road direction angle, and a second neural network set among the neural network sets may output second road structure information including a collision area in each intersection direction based on the current location. A third neural network set among the neural network sets may output third road structure information including a collision area in each intersection direction ahead at a specific distance.

In addition, according to the present disclosure, the neural network sets may be individually trained and updated.

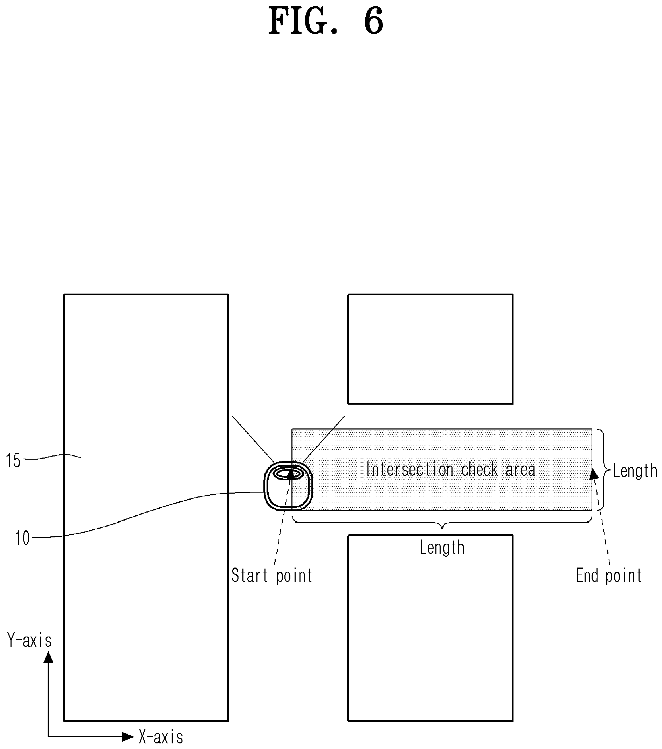

FIG. 6 is a diagram illustrating a process of calculating an intersection collision area by a driving robot according to an embodiment of the present disclosure.

As shown in FIG. 6, according to the present disclosure, when a straight line of a predetermined length or longer is detected in generating the road structure information, it may be recognized as a hallway wall 15. When the straight line of the wall 15 is positioned on the left and right sides of the robot 10, a road direction and hallway direction may be calculated based on the straight line of the wall 15.

In addition, according to the present disclosure, the neural network model may be pre-trained such that, when the intersection check area is at 90 degrees to the right, the length and width of the intersection check area may be checked based on the start point and end point of the intersection, and the area of collision with walls is calculated assuming an intersection space in each direction.

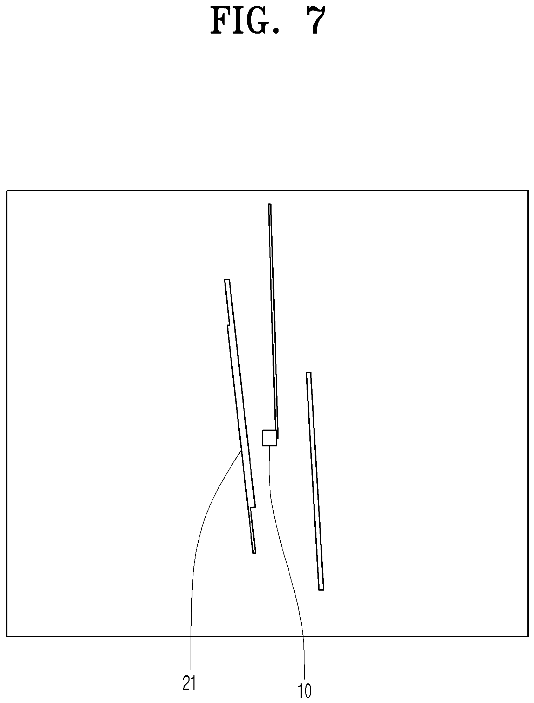

FIGS. 7 to 9 are diagrams illustrating road structure information related to a driving robot according to an embodiment of the present disclosure.

As shown in FIG. 7, according to the present disclosure, when a straight line 21 of a predetermined length or longer is detected in generating the road structure information, it may be recognized as a hallway wall. When the straight line 21 of the wall is positioned on the left and right sides of the robot 10, a road direction and hallway direction may be calculated based on the straight line 21 of the wall.

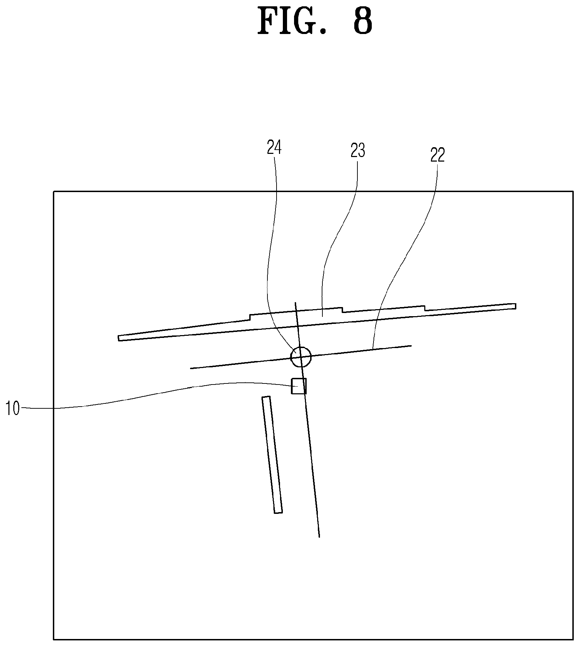

As shown in FIG. 8, according to the present disclosure, when a straight line 21 of a predetermined length or longer is detected in generating the road structure information, it may be recognized as a hallway wall. When the straight line 21 of the wall is positioned facing a road 22, the corresponding location may be recognized as an intersection 24.

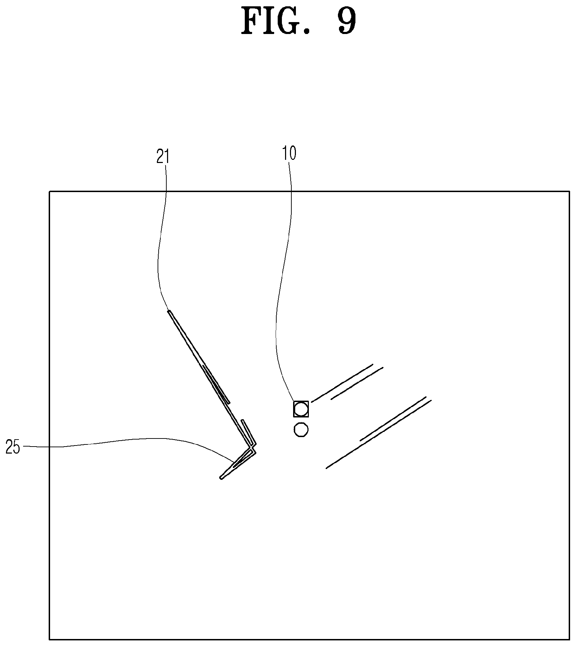

As shown in FIG. 9, according to the present disclosure, when a straight line 21 of a predetermined length or longer is detected in generating the road structure information, it may be recognized as a hallway wall. When the straight line 21 of the wall meets a road 25 at a right angle, the corresponding location may be recognized as a vertex and corner.

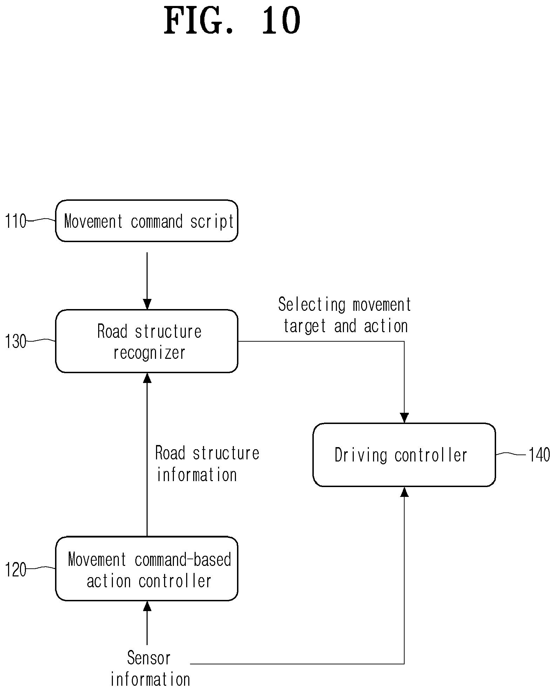

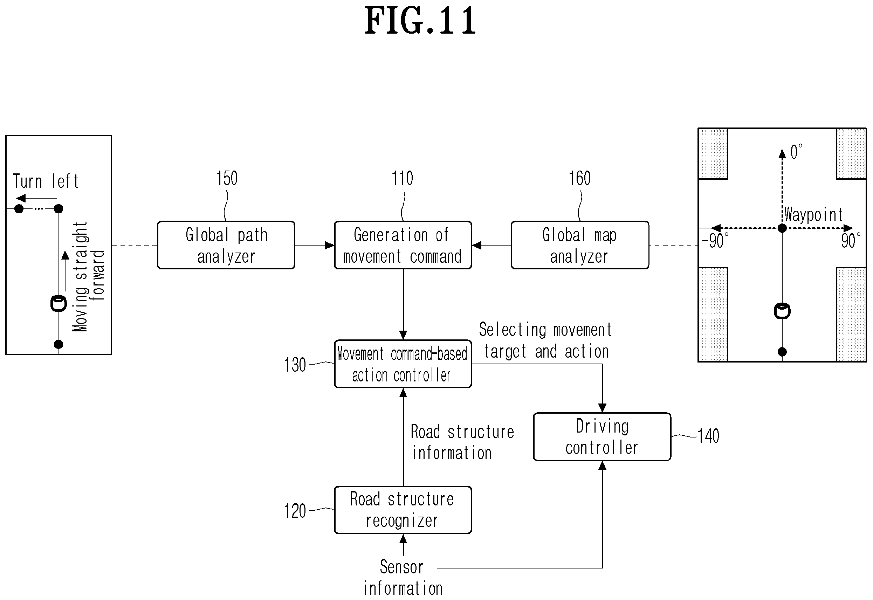

FIGS. 10 and 11 are diagrams illustrating a controller of a driving robot according to an embodiment of the present disclosure.

As shown in FIG. 10, the controller of the driving robot may include a movement command generator 110 configured to generate a movement command script, a road structure recognizer 120 configured to recognize a road structure based on surrounding environment information and generate road structure information, an action controller 130 configured to select a movement target point and action of the robot based on the road structure information and the movement command, and a driving controller 140 configured to input selection information including the surrounding environment information and the movement target point and the action of the robot into a pre-trained neural network model to determine a driving operation of the robot, and control the drive motor to move the robot based on the determined driving operation.

Here, according to the present disclosure, when the movement command is input, the type of the movement command may be checked, a movement command script corresponding to the type of the movement command may be generated, and the movement target point and action of the robot may be selected based on the movement command script and the road structure information.

According to the present disclosure, in checking the type of the movement command, when the type of the movement command is a script containing movement command content from a starting point to a destination, the script containing the movement command content may be used as the movement command script.

In addition, as shown in FIG. 11, according to the present disclosure, in checking the type of movement command, when the type of the movement command is analysis information obtained by analyzing a map and path given before a failure of recognition of a location of the robot, the movement command script may be generated based on the analysis information.

Here, the present disclosure may include a global path analyzer 150 configured to analyze a global path based on the map given before the failure of recognition of the location of the robot to provide path analysis information, and a global map analyzer 160 configured to analyze a global map around the path based on the map given before the failure of recognition of the location of the robot to provide map analysis information.

As one example, the global map analyzer 160 may analyze the global map around the path to generate a movement command including intersection information and road structure information.

That is, the global map analyzer 160 may determine the map structure around the location of the robot on the estimated path and determine the map structure around an estimated target waypoint.

In addition, in determining the map structure around the location of the robot, the global map analyzer 160 may determine the map structure based on the distance to the left wall and the distance to the right wall on the estimated path, and the direction angle of the left wall and the direction angle of the right wall on the global path.

Here, in determining the map structure around the target waypoint, the global map analyzer 160 may determine the map structure based on intersection type and intersection direction information.

As an example, the global map analyzer 160 may generate a movement command script including the distance the robot is to move, the action direction after the movement, the intersection type information, and direction information at an intersection.

In this case, when providing the direction information at the intersection, the global map analyzer 160 may provide a clock-hand direction.

In addition, when there is an error in the location of the robot, the global path analyzer 150 may calculate the location of the robot on the path through odometry position estimation, analyze the movement path up to the current point, and generate a movement command for the remaining path to the destination.

Here, the global path analyzer 150 may generate a movement command script including the distance the robot is to move and the action direction after the movement.

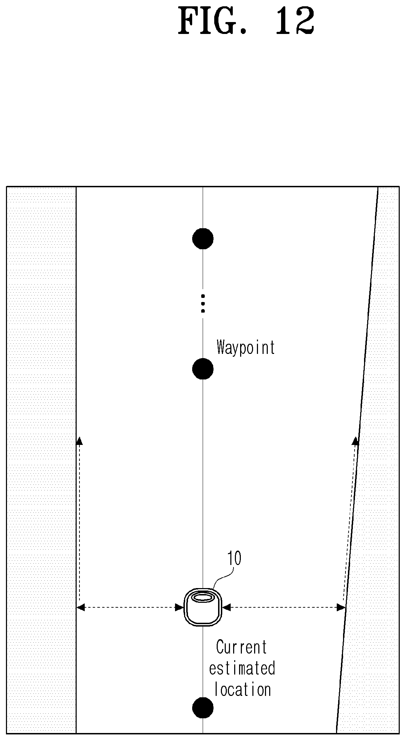

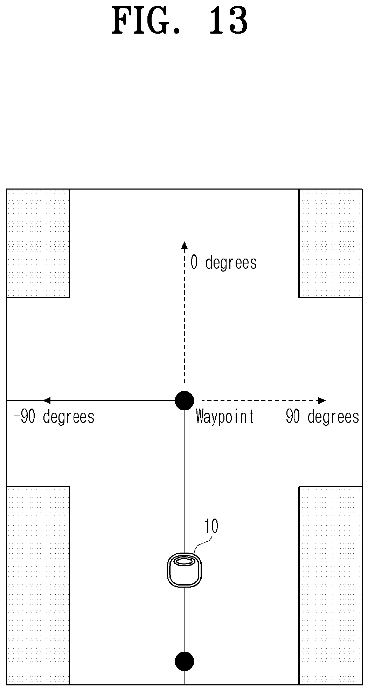

FIGS. 12 and 13 are diagrams illustrating a global map analysis process of a driving robot according to an embodiment of the present disclosure.

As shown in FIGS. 12 and 13, the global map analyzer may analyze the global map around the path to generate a movement command including intersection information and road structure information.

That is, the global map analyzer may determine the map structure around the location of the robot on the estimated path and determine the map structure around an estimated target waypoint.

In addition, as shown in FIG. 12, in determining the map structure around the location of the robot 10, the global map analyzer may determine the map structure based on the distance to the left wall and the distance to the right wall on the estimated path, and the direction angle of the left wall and the direction angle of the right wall on the global path.

In addition, as shown in FIG. 13, in determining the map structure around the target waypoint, the global map analyzer may determine the map structure based on intersection type and intersection direction information.

As an example, the global map analyzer may generate a movement command script including the distance the robot is to move, the action direction after the movement, the intersection type information, and direction information at an intersection.

In this case, when providing the direction information at the intersection, the global map analyzer may provide a clock-hand direction.

For example, a movement command script including the distance the robot is to move, the action direction after the movement, the intersection type information, and direction information at the intersection may be generated as follows.

When the movement command script is <action direction="-90" distance="2.1" xroad="LFR" xroad_directions_hr="12.0, 9.0, 3.0" />, the movement command script may be interpreted as: rotate 90 degrees to the left at 2.1 m ahead, the intersection type is LFR (+), and the intersection has directions at 12 o'clock, 9 o'clock, and 3 o'clock.

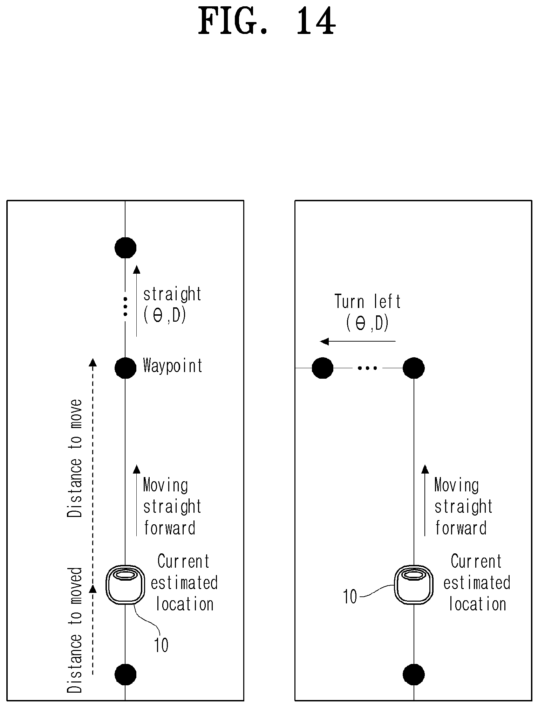

FIG. 14 is a diagram illustrating a global path analysis process of a driving robot according to an embodiment of the present disclosure.

As shown in FIG. 14, when there is an error in the location of the robot 10, the global path analyzer may calculate the location of the robot on the path through odometry position estimation, analyze the movement path up to the current point, and generate a movement command for the remaining path to the destination.

Here, the global path analyzer may generate a movement command script including the distance the robot 10 is to move and the action direction after the movement.

For example, a movement command script including the distance the robot is to move and the action direction after movement may be generated as follows.

When the movement command script is <action direction="-90" distance="2.1" />, the movement command script may be interpreted as: rotate 90 degrees to the left at 2.1 m ahead.

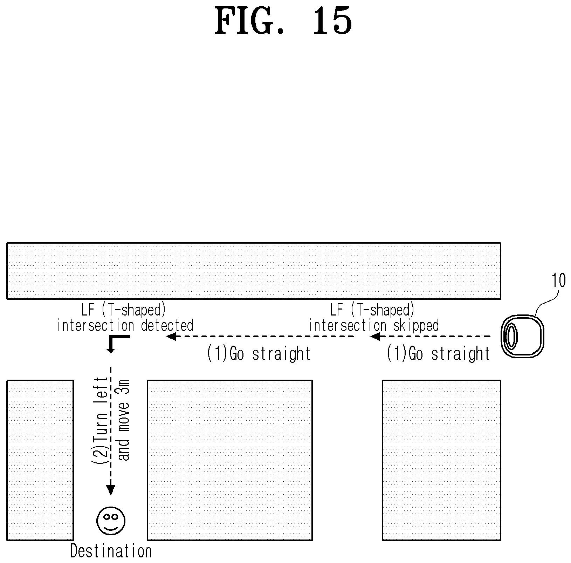

FIG. 15 is a diagram illustrating a movement process based on a movement command script of a driving robot according to an embodiment of the present disclosure.

As shown in FIG. 15, according to the present disclosure, in interpreting the movement command script, when the movement command script has unit action commands including robot driving direction information, a distance to move, action completion conditions, and a designated intersection skip count, the unit action commands may be interpreted sequentially in the order in which the unit action commands are arranged.

As one example, when the movement command script is <action direction="STRAIGHT" distance="1.0" stop _cond="LF" skip _num="1"/>, the movement command script may be interpreted as: the driving direction is straight, skip the first intersection once after advancing at least 1 m, and continue to go straight until the second LF (T-shaped) intersection appears.

Next, when the movement command script is <action direction="LEFT" distance="3.0"/>, the movement command script may be interpreted as: turn left at the intersection and then move to a point 3 m away.

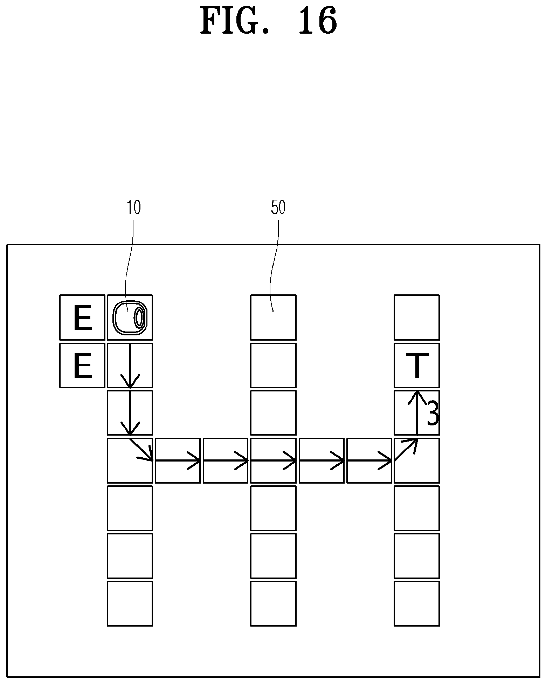

FIG. 16 is a diagram illustrating a process of generating a movement command script based on a sketch map by a driving robot according to an embodiment of the present disclosure.

As shown in FIG. 16, according to the person disclosure, when the type of the movement command is a sketch map containing movement indications from a starting point to a destination, the movement command script may be generated based on the sketch map 50 containing the movement indications.

Here, according to the person disclosure, based on the sketch map containing the movement indications in a block structure, it may be checked whether a straight-ahead distance of a straight road and a straight-ahead distance between the destination and the intersection are set within the sketch map. Then, when both the straight-ahead distance of the straight road and the straight-ahead distance between the destination and the intersection are set, the movement command script may be generated.

As shown in FIG. 16, when the robot 10 in front of elevator E is moving along the arrow direction and the sketch map 50 with a destination T located 3 m ahead is input, a corresponding movement command script may be generated based on the input.

According to the person disclosure, in generating the movement command script, the width of an intersection may be automatically recognized during driving of the robot, and a return driving path of the robot may be automatically recognized. Thus, the recognized intersection width and return driving path may be reflected in the movement command script.

In another case, according to the person disclosure, when the type of the movement command is a sketch map editing map in checking the type of the movement command, the movement command script may be generated based on the sketch map editing map.

Here, according to the person disclosure, in generating the sketch map editing map, the sketch map editing map may be generated by providing a floor plan of a map, adjusting transparency of the floor plan of the map, inputting a scale and information related to the map, inputting road information related to the map, inputting the destination on the map, and performing a test by selecting the starting point and the destination on the map and displaying a path.

As one example, according to the person disclosure, in inputting the scale related to the map, two points may be selected within the map and the distance between the two points may be input to set the scale related to the map. In inputting the information related to the map, the information related to the map including at least one of a region name of the map and a floor number may be input. In inputting road information related to the map, hallway information including the location and direction of the road and the width of the hallway may be input.

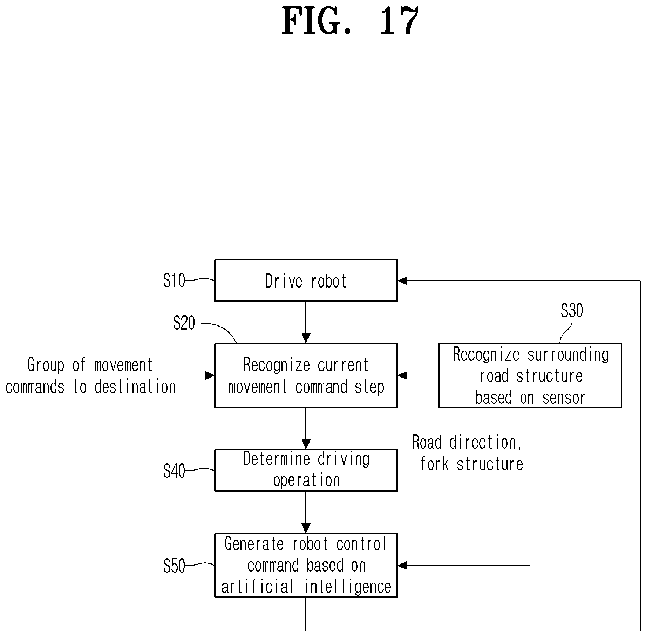

FIG. 17 is a flowchart illustrating a control process of a driving robot according to an embodiment of the present disclosure.

As shown in FIG. 17, according to the person disclosure, when the robot is driven (S10), surrounding environment information and a movement command may be acquired, and a road structure may be recognized based on the surrounding environment information to generate road structure information (S30).

Next, according to the person disclosure, a current movement command step may be recognized based on the road structure information and the movement commands (S20), a movement target point and an action of the robot may be selected.

Here, according to the present disclosure, when the movement command is input, the type of the movement command may be checked, a movement command script corresponding to the type of the movement command may be generated, and the movement target point and action of the robot may be selected based on the movement command script and the road structure information.

According to the present disclosure, in checking the type of the movement command, when the type of the movement command is a script containing movement command content from a starting point to a destination, the script containing the movement command content may be used as the movement command script.

In some cases, according to the present disclosure, in checking the type of movement command, when the type of the movement command is analysis information obtained by analyzing a map and path given before a failure of recognition of a location of the robot, the movement command script may be generated based on the analysis information.

In another case, according to the person disclosure, in checking the type of the movement command, when the type of the movement command is a sketch map containing movement indications from a starting point to a destination, the movement command script may be generated based on the sketch map containing the movement indications.

In yet another case, according to the person disclosure, when the type of the movement command is a sketch map editing map, the movement command script may be generated based on the sketch map editing map.

Subsequently, according to the present disclosure, selection information including the surrounding environment information and the movement target point and the action of the robot may be input into a pre-trained neural network model to determine a driving operation of the robot (S40).

Then, according to the present disclosure, a robot control command may be generated to move the robot based on the determined driving operation (S50).

As described above, according to the present disclosure, a driving robot may stably drive to a destination while recognizing a road structure without map and location information, by selecting a movement target point and an action of the robot based on road structure information and a movement command and determining a driving operation of the robot based on artificial intelligence.

Thus, the present disclosure may enable a robot to travel even without map and location information, thereby eliminating the need for scanning and mapping operations for driving of the robot and saving the cost and time consumed therefor.

In addition, the present disclosure may be applied even when the robot temporarily loses location information.

That is, according to the present disclosure, the robot does not need to have map and location information, and therefore it may be operated with a relatively lightweight system and may be easily applied to new environments.

### INDUSTRIAL APPLICABILITY

According to the present disclosure, a driving robot may stably drive to a destination while recognizing a road structure without map and location information, by selecting a movement target point and an action of the robot based on road structure information and a movement command and determining a driving operation of the robot based on artificial intelligence. Therefore, the present disclosure has significant industrial applicability.

## Claims

1. A driving robot comprising:
a sensor configured to acquire surrounding environment information;
an input unit configured to receive a movement command;
a drive motor configured to move the robot; and
a controller configured to control the drive motor based on the surrounding environment information and the movement command,
wherein the controller is configured to:
recognize a road structure based on the surrounding environment information to generate road structure information;
select a movement target point and an action of the robot based on the road structure information and the movement command;
determine a driving direction and speed of the robot by inputting the surrounding environment information and selection information including the movement target point and the action of the robot into a pre-trained neural network model; and
control the drive motor to move the robot based on the determined driving direction and speed.

2. The driving robot of claim 1, wherein, in generating the road structure information, the controller collects the surrounding environment information from the sensor, generates a measured distance map based on the surrounding environment information, and inputs the measured distance map into the pre-trained neural network model to recognize the road structure and generate the road structure information.

3. The driving robot of claim 2, wherein, in generating the road structure information, the controller is configured to:
scale one-dimensional sensor input data including the measured distance map to a preset size;
classify the scaled input data into feature extraction items; and
input the classified feature extraction items into a plurality of pre-trained neural network models, respectively to generate road structure information for each of the feature extraction items.

4. The driving robot of claim 2, wherein, based on a straight line of a predetermined length or longer being detected in generating the road structure information, the controller recognizes the straight line as a hallway wall,
wherein, based on the straight line of the wall being located on left and right sides of the robot, the controller calculates a road direction and hallway direction based on the straight line of the wall.

5. The driving robot of claim 2, wherein, based on a straight line of a predetermined length or longer being detected in generating the road structure information, the controller recognizes the straight line as a hallway wall,
wherein, based on the straight line of the wall being positioned facing a road, the controller recognizes a corresponding location of the straight line as an intersection.

6. The driving robot of claim 2, wherein, based on a straight line of a predetermined length or longer being detected in generating the road structure information, the controller recognizes the straight line as a hallway wall,
wherein, based on the straight line of the wall meeting a road at a right angle, the controller recognizes a corresponding location as a vertex and corner.

7. The driving robot of claim 1, wherein, based on the movement command being input in selecting the movement target point and the action of the robot, the controller is configured to:
check a type of the movement command;
generate a movement command script corresponding to the type of the movement command; and
select the movement target point and the action of the robot based on the movement command script and the road structure information.

8. The driving robot of claim 7, wherein, based on the type of the movement command being a script containing movement command content from a starting point to a destination in checking the type of the movement command, the controller uses the script containing the movement command content as the movement command script.

9. The driving robot of claim 7, wherein, in checking the type of the movement command, based on that the type of the movement command is analysis information obtained by analyzing a map and path given before a failure of recognition of a location of the robot, the controller generates the movement command script based on the analysis information.

10. The driving robot of claim 7, wherein, based on the type of the movement command being a sketch map containing movement indications from a starting point to a destination in checking the type of the movement command, the controller generates the movement command script based on the sketch map containing the movement indications.

11. The driving robot of claim 10, wherein the controller is configured to: check, based on the sketch map containing the movement indications in a block structure, whether a straight-ahead distance of a straight road and a straight-ahead distance between the destination and an intersection are set within the sketch map; and
generate the movement command script when both the straight-ahead distance of the straight road and the straight-ahead distance between the destination and the intersection are set.

12. The driving robot of claim 7, wherein, based on the type of the movement command being a sketch map editing map in checking the type of the movement command, the controller generates the movement command script based on the sketch map editing map.

13. The driving robot of claim 12, wherein, in generating the sketch map editing map, the controller generates the sketch map editing map by:
providing a floor plan of a map;
adjusting transparency of the floor plan of the map;
inputting a scale and information related to the map;
inputting road information related to the map;
inputting the destination on the map; and
performing a test by selecting the starting point and the destination on the map and displaying a path.

14. The driving robot of claim 1, wherein the controller comprises:
a movement command generator configured to generate a movement command script;
a road structure recognizer configured to recognize a road structure based on surrounding environment information and generate road structure information;
an action controller configured to select a movement target point and action of the robot based on the road structure information and the movement command; and
a driving controller configured to:
input selection information including the surrounding environment information and the movement target point and the action of the robot into a pre-trained neural network model to determine a driving operation of the robot; and
control the drive motor to move the robot based on the determined driving operation.

15. A method of controlling a driving robot including a drive motor, the method comprising:
acquiring surrounding environment information and a movement command;
recognizing a road structure based on the surrounding environment information and generating road structure information;
selecting a movement target point and an action of the robot based on the road structure information and the movement command;
determining a driving operation of the robot by inputting the surrounding environment information and selection information including the movement target point and the action of the robot into a pre-trained neural network model; and
controlling the drive motor to move the robot based on the determined driving operation.
